# EUROPEAN PATENT SPECIFICATION

(11) **EP 2 498 942 B1**
(45) Date of publication and mention of the grant of the patent: **27.03.2019**
(21) Application number: 10778633.7
(22) Date of filing: 10.11.2010
(51) Int. Cl.: B23K 1/00, B23K 1/19, B23K 35/26

(54) **SOLDERING METHOD**
LÖTVERFAHREN
PROCÉDÉ DE SOUDAGE

(30) Priority: 12.11.2009 FR 0905429; 15.04.2010 US 324505 P
(43) Date of publication of application: 19.09.2012
(73) Proprietor: Safran Electronics & Defense, 92100 Boulogne-Billancourt (FR)
(72) Inventor: VANDEBEUQUE, Paul, F-75015 Paris (FR)
(74) Representative: Cabinet Plasseraud
(86) International application number: PCT/EP2010/067221
(87) International publication number: WO 2011/058062

(56) References cited:
- EP-A1- 1 542 271
- JP-A- 2009 212 906

## Description

The invention relates to a lead-free soldering method in compliance with the directive RoHS (2002/95/CE), to a gyroscope and to a soldered part that are manufactured using this soldering method.

Document EP 1 542 271 discloses a method of soldering a semiconductor light emitting element on a substrate 4 which reduces the thermal damage to the semiconductor light emitting element. According to this method, a submount is deposited on the substrate. The submount comprises the successive following layers : an adhesion layer comprising Platinium or Titanium ; a barrier layer comprising Palladium or Platinium; an electrode layer; an adhesion layer comprising Titanium and Platinium and finally, a solder layer.

The gold layer serves as a electrical conducting layer adapted to control the light emmiting element. This gold layer is not melted with the other layers after soldering. A platinium layer is deposited under and above the gold layer to ensure that this gold layer will not merged with the tin-silver alloy layer and the the adhesion layer.

However, the submount comprises a large numbers of layers. So, it is complex and expensive to produce in a series process.

Further, this submount presents a thickness too high to be compatible with some technical applications.

In particular, the invention relates to a method of soldering a conducting body to a substrate using a tin-silver alloy or a tin-silver-copper alloy, as well as to a gyroscope and to a soldered part that are manufactured by this soldering method.

At the present time, there is no method for lead-free tin soldering to a thin film. This is because the higher reflow temperature of a tin-silver solder than a tin-lead solder increases dissolution and requires the thicknesses of these films to be increased. On brittle substrates, such as for example ceramic-type substrates, it is desirable to lower the mechanical stresses and therefore to limit the thicknesses of thin films.

The object of the present invention is to provide a method of lead-free soldering to thin films.

For this purpose, one subject of the invention is a method of soldering an at least partially conducting body, called conducting body, to a substrate using an alloy chosen from a tin-silver alloy and a tin-silver-copper alloy, the method comprises the following steps:
- metallization of the substrate, said metallization step comprising a step of depositing a tie layer on the substrate and a step of depositing a diffusion barrier layer, said tie layer having any one of the chemical components chosen from chromium, titanium and a titanium alloy, said diffusion barrier layer comprising a material chosen from platinum and palladium; and
- application of a solder between the conducting body and the metallized substrate, said solder comprising an alloy chosen from a tin-silver alloy and a tin-silver-copper alloy;
characterized in that the method comprises depositing a wetting layer comprising gold ; said wetting layer being deposited between the step of depositing a diffusion barrier layer and the step of applying a solder, the solder (20) being deposited straight on the wetting layer (16).

This soldering method includes the deposition of a diffusion barrier comprising a material chosen from platinum and palladium and the deposition of a tie layer and of a wetting layer so as to compensate for the drawbacks of the diffusion barrier layer.

According to particular embodiments, the method comprises one or more of the following features:
- the tie layer is a thin film having a thickness of between 5 and 50 nanometers;
- the tie layer has a thickness of about 30 nanometers;
- the diffusion barrier layer is a thin film having a thickness of between about 100 nanometers and 1500 nanometers;
- the diffusion barrier layer has a thickness of about 200 nanometers;
- the wetting layer is a thin film having a thickness approximately equal to 0.4% of the thickness of the solder;
- the wetting layer is a thin film having a thickness of between about 5 nanometers and 1 micron;
- the wetting layer has a thickness of about 50 nanometers; and
- the tie layer comprises chromium and the diffusion barrier layer comprises platinum.

The invention will be better understood on reading the following description, given solely by way of example, and with reference to the drawings in which:
- Figure 1 is a block diagram of the soldering method according to the invention;
- Figure 2 is a schematic view in cross section of a soldered part; and
- Figure 3 is a schematic view in axial section of a gyroscope.

The invention relates to a method of soldering a body 2 to a substrate 4.

The body 2 is at least partially conducting. It is called conducting body hereafter. In particular, it has at least one conducting face intended to be soldered to the substrate 4. The conducting face is made of a conducting material such as, for example, a metallic material or a composite material comprising a metal.

The substrate 4 is for example formed by silica, silicon, a ceramic, metal oxides, crystalline materials or glass.

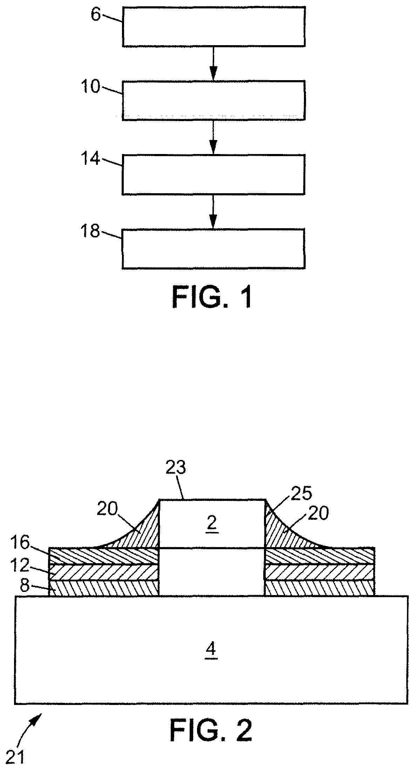

Referring to Figures 1 and 2, the soldering method starts with a step of metallizing the substrate. This metallization step comprises a step 6 of depositing a tie layer 8 on the substrate 4, a step 10 of depositing a diffusion barrier layer 12 on the tie layer 8 and a step 14 of depositing a wetting layer 16 on the diffusion barrier layer 12.

The tie layer 8 is suitable for ensuring that the body 2 is strongly tied to the substrate 4. The tie layer 8 is, for example, made of chromium. It has a thickness of between about 5 and 50 nanometers. Preferably, this layer has a thickness of about 30 nanometers.

As a variant, this tie layer 8 is made of titanium or one of its alloys.

The diffusion barrier layer 12 is for example made of platinum, palladium or nickel. The diffusion barrier layer 12 creates a diffusion barrier suitable for reducing the rate of advance of tin from the soldering alloy into the substrate 4. Moreover, this diffusion barrier layer 12 creates non-brittle intermetallics with tin.

The diffusion barrier layer 12 is a thin film having a thickness of between about 100 and 1500 nanometers. Preferably, this layer 12 has a thickness of about 200 nanometers.

The wetting layer 16 is made of gold. The wetting layer 16 promotes direct wettability of the soldering alloy to the diffusion barrier layer 12.

The wetting layer 16 is a thin film that has a thickness of between about 5 nanometers and 1 micron. Preferably, the wetting layer 16 has a thickness of about 50 nanometers. The wetting layer is a sacrificial layer which will be absorbed by the solder, i.e; by the tin-silver alloy or the tin-silver-copper alloy. This gold layer disappeared after the soldering process. This gold layer is added to enhance the adhesion of the tin-silver alloy or the tin-silver-copper alloy. The tie layer 8, the diffusion barrier layer 12 and the wetting layer 16 are, for example, produced by sputtering or by evaporation.

During a step 18, a solder 20 is applied between the metallized substrate 4 and the conducting face 25 of the conducting body. The solder 20 is made of a tin-silver alloy or of a tin-silver-copper alloy.According to the invention, the solder 20 is deposited directly or straightly on the wetting layer 16, i.e. without any other intermadiaire layer.

The wetting layer 16 is a thin film having a thickness approximately equal to 0.4% of the thickness of the solder 20.

The solder joint produced by this soldering method includes a thin-film trilayer applied on the substrate 4. This trilayer comprises the tie layer 8, the diffusion barrier layer 12 and the wetting layer 16. This trilayer has a thickness of less than 3 microns and preferably less than 1 micron.

Figure 2 shows an example of a soldered part 21 manufactured according to the soldering method described above. In this example, the soldered part 21 is a portion of an electronic circuit of the SMC (Surface Mounted Component) type. This electronic circuit comprises a substrate 4, and in particular an alumina or silica wafer, and a conducting body 2 formed by an electronic component 23, the vertical lateral faces 25 of which are metallized.

As a variant, the soldered part is, for example, an electronic component, a hybrid circuit, a sensor, etc.

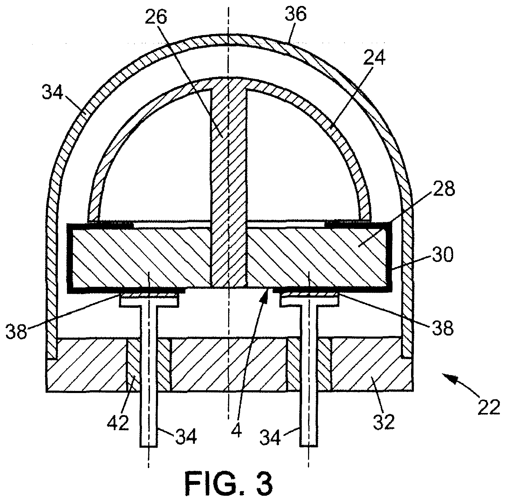

Referring to Figure 3, a gyroscope 22 manufactured by implementing the soldering method according to the invention comprises a resonator 24 of bell shape or spherical cap shape, which has a shaft 26 for fastening it, and a part 28 carrying electrodes 30, called hereafter electrode carrier 28, in which the shaft 26 of the resonator 24 is anchored. The resonator 24 is made of silica and the electrode carrier 28 is made of a ceramic or of silica in order to ensure stability of the air gaps.

The electrode carrier 28 may be hemispherical with electrodes placed facing the internal face of the resonator 24. In this case, the internal face of the resonator 24 extends around the outer perimeter of the electrode carrier 28 (not shown).

The electrode carrier 28 may also be flat with electrodes 30 placed facing the end face of the resonator 24, as illustrated in Figure 3.

The gyroscope 22 further includes a base 32, rods 34 for supporting the electrode carrier 28, for example made of Kovar®, and a cover 36 fastened to the base 32.

The support rods 34 form an arrangement in which the electrode carrier 28 is mounted on the base 32 via "piles". This "pile" mounting arrangement makes it possible, in the case of thermal expansion, for the electrode carrier 28 to move translationally parallel to the base 22. This translational movement is obtained by deformation of the support rods 34. This "pile" mounting arrangement is described in patent FR 2 805 039.

For example, eleven support rods 34 support the electrode carrier 28. The support rods 34 are conducting. They are fastened to the underside of the electrode carrier 28 and in particular to the electrodes 30, so as to ensure electrical connection between the electrodes 30 and the support rods 34. Some of the support rods 34 may conduct excitation signals or detection signals of the resonator. Other support rods 34 merely provide the electrode carrier 28 with stability.

According to the invention, the soldering method illustrated in figure 1 is implemented in order to fasten the support rods 34 to the electrodes 30 of the electrode carrier. In particular, the soldering method is implemented in order to produce the solder joint 38.

The base 32 is a circular part that carries, in the example illustrated, eleven insulating vacuum-tight bushings 42 through which the support rods 34 are engaged.

The cover 36 defines with the base 32 an hermetically sealed enclosure in which a high vacuum is created. A getter material is generally provided in conjunction with said enclosure so as to absorb the residual gases therein after outgassing and sealing.

As a variant, the support rods are made of a metal.

The soldering method described in the present patent application with reference to Figure 3 makes it possible to produce a gyroscope with a resonator of bell shape or spherical cap shape. However, it may also be implemented for producing other sensors having a cell supported by conducting support rods.

Advantageously, the soldering method according to the invention may also be used to solder hybrid circuits, sensors, rods, pads, connectors, components, or for making connections between two substrates for MEMS devices or for sealing vacuum-tight covers onto substrates.

Advantageously, the soldering method makes it possible to solder materials that are not naturally solderable, such as crystalline substrates, ceramics, glass frit and weakly elastic materials.

Advantageously, the tin-silver alloy has a stiffness greater than that provided by any other type of soldering or other type of assembly, such as adhesive bonding. This stiffness stabilizes the frequency plane of the gyroscope. The alloy increases the impact strength of the gyroscope.

Advantageously, by implementing the soldering method according to the invention in a gyroscope, it is possible to compensate for the differential expansion between the Kovar® support rods and the substrate.

Advantageously, the outgassing of the solder produced according to the method of the invention is negligible compared with the outgassing from adhesives under high vacuum. As a consequence, all the gases beneath the cover are easily pumped by their getter.

Advantageously, since the tin-silver alloy and the tin-silver-copper alloy have a melting point of 230°C, it is possible to increase the outgassing temperature up to about 200°C in order to ensure a better vacuum beneath the cover.

Advantageously, unlike conducting adhesives, the electrical continuity between the electrodes and the support rods is ensured over time.

Advantageously, and contrary to adhesive bonding, the soldering of the substrate to the body according to the method of the invention does not lose its mechanical stiffness over the course of time.

## Claims

1. Method of soldering an at least partially conducting body, called conducting body (2, 34), to a substrate (4, 28), the method comprises the following steps:
- metallization of the substrate (4), said metallization step comprising a step (6) of depositing a tie layer (8) on the substrate (4) and a step (10) of depositing a diffusion barrier layer (12), said tie layer (8) having any one of the chemical components chosen from chromium, titanium and a titanium alloy, said diffusion barrier layer (12) comprising a material chosen from platinum and palladium; and
- application (18) of a solder (20) between the conducting body (2, 34) and the metallized substrate (4), said solder (20) comprising an alloy chosen from a tin-silver alloy and a tin-silver-copper alloy;
**characterized in that** the method comprises depositing a wetting layer (16); said wetting layer comprising gold ; said wetting layer being deposited between the step (10) of depositing a diffusion barrier layer (12) and the step (18) of applying a solder (20), the solder (20) being deposited straight on the wetting layer (16).

2. Soldering method according to Claim 1, in which the tie layer (8) is a thin film having a thickness of between 5 and 50 nanometers.

3. Soldering method according to Claim 1, in which the tie layer (8) has a thickness of about 30 nanometers.

4. Soldering method according to Claim 1, in which the diffusion barrier layer (12) is a thin film having a thickness of between about 100 nanometers and 1500 nanometers.

5. Soldering method according to Claim 1, in which the diffusion barrier layer (12) has a thickness of about 200 nanometers.

6. Soldering method according to any of the claims 1 to 5, in which the wetting layer (16) is a thin film having a thickness approximately equal to 0.4% of the thickness of the solder (20).

7. Soldering method according to any of the claims 1 to 6, in which the wetting layer (16) is a thin film having a thickness of between about 5 nanometers and 1 micron.

8. Soldering method according to any of the claims 1 to 7, in which the wetting layer (16) has a thickness of about 50 nanometers.

9. Soldering method according to Claim 1, in which the tie layer (8) comprises chromium and in which the diffusion barrier layer (12) comprises platinum.

## Patentansprüche

1. Verfahren zum Löten eines zumindest teilweise leitenden Körpers, der Leitkörper (2, 34) genannt wird, auf ein Substrat (4, 28), wobei das Verfahren die folgenden Schritte aufweist:
- Metallisierung des Substrats (4), wobei der Metallisierungsschritt einen Schritt (6) des Abscheidens einer Haftvermittlerschicht (8) auf dem Substrat (4) und einen Schritt (10) des Abscheidens einer Diffusionssperrschicht (12) aufweist, wobei die Haftvermittlerschicht (8) eine beliebige der chemischen Komponenten ausgewählt aus Chrom, Titan und Titanlegierung umfasst, wobei die Diffusionssperrschicht (12) ein Material ausgewählt aus Platin und Palladium umfasst; und
- Anbringen (18) eines Lots (20) zwischen dem Leitkörper (2, 34) und dem metallisierten Substrat (4), wobei das Lot (20) eine Legierung ausgewählt aus einer Zinn-SilberLegierung und einer Zinn-Silber-KupferLegierung umfasst;
**dadurch gekennzeichnet, dass** das Verfahren ein Abscheiden einer Benetzungsschicht (16) umfasst; wobei die Benetzungsschicht Gold umfasst; wobei die Benetzungsschicht zwischen dem Schritt (10) des Abscheidens einer Diffusionssperrschicht (12) und dem Schritt (18) des Anbringens eines Lots (20) abgeschieden wird, wobei das Lot (20) direkt auf der Benetzungsschicht (16) abgeschieden wird.

2. Lötverfahren nach Anspruch 1, bei dem die Haftvermittlerschicht (8) eine dünne Schicht mit einer Dicke von zwischen 5 und 50 Nanometern ist.

3. Lötverfahren nach Anspruch 1, bei dem die Haftvermittlerschicht (8) eine Dicke von ungefähr 30 Nanometern aufweist.

4. Lötverfahren nach Anspruch 1, bei dem die Diffusionssperrschicht (12) eine dünne Schicht mit einer Dicke von zwischen ungefähr 100 und 1500 Nanometern ist.

5. Lötverfahren nach Anspruch 1, bei dem die Diffusionssperrschicht (12) eine Dicke von ungefähr 200 Nanometern aufweist.

6. Lötverfahren nach einem der Ansprüche 1 bis 5, bei dem die Benetzungsschicht (16) eine dünne Schicht mit einer Dicke ungefähr gleich 0,4 % der Dicke des Lots (20) ist.

7. Lötverfahren nach einem der Ansprüche 1 bis 6, bei dem die Benetzungsschicht (16) eine dünne Schicht mit einer Dicke von zwischen ungefähr 5 Nanometern und 1 Mikron ist.

8. Lötverfahren nach einem der Ansprüche 1 bis 7, bei dem die Benetzungsschicht (16) eine Dicke von ungefähr 50 Nanometern aufweist.

9. Lötverfahren nach Anspruch 1, bei dem die Haftvermittlerschicht (8) Chrom umfasst und bei dem die Diffusionssperrschicht (12) Platin umfasst.

## Revendications

1. Procédé de brasage d'au moins un corps, appelé corps conducteur (2, 34), sur un substrat (4, 28), le procédé comportant les étapes suivantes :
- métallisation du substrat (4), ladite étape de métallisation comportant une étape de dépôt (6) d'une couche d'accroche (8) sur le substrat (4) et une étape de dépôt (10) d'une couche barrière de diffusion (12), ladite couche d'accroche (8) comportant l'un quelconque des composants chimiques choisi parmi le chrome, le titane et un alliage de titane, ladite couche barrière de diffusion (12) comportant un matériau choisi parmi le platine et le palladium ;
- application (18) d'une brasure (20) entre le corps conducteur (2, 34) et le substrat métallisé (4), ladite brasure (20) comportant un alliage choisi parmi un alliage d'étain-argent et un alliage étain-argent-cuivre ;
**caractérisé en ce que** le procédé comporte le dépôt d'une couche de mouillage (16); la couche de mouillage comprenant de l'or; la couche de mouillage étant déposée entre l'étape (10) de dépôt d'une couche de barrière de diffusion (12) et l'étape de dépôt de la brasure (20), la brasure (20) étant déposée directement sur la couche de mouillage (12).

2. Procédé de brasage selon la revendication 1, dans lequel la couche d'accroche (8) est une couche mince présentant une épaisseur comprise entre environ 5 et 50 nanomètres.

3. Procédé de brasage selon la revendication 1, dans lequel la couche d'accroche (8) présente une épaisseur environ égale à 30 nanomètres.

4. Procédé de brasage selon la revendication 1, dans lequel la couche barrière de diffusion (12) est une couche mince présentant une épaisseur comprise entre environ 100 nanomètres et 1.500 nanomètres.

5. Procédé de brasage selon la revendication 1, dans lequel la couche barrière de diffusion (12) présente une épaisseur égale à environ 200 nanomètres.

6. Procédé de brasage selon l'une quelconque des revendications 1 à 5, dans lequel la couche de mouillage (16) est une couche mince présentant une épaisseur sensiblement égale à 0,4% de l'épaisseur de la brasure (20).

7. Procédé de brasage selon l'une quelconque des revendications 1 à 6, dans lequel la couche de mouillage (16) est une couche mince présentant une épaisseur comprise entre environ 5 nanomètres et 1 micron.

8. Procédé de brasage selon l'une quelconque des revendications 1 à 7, dans lequel la couche de mouillage (16) présente une épaisseur environ égale à 50 nanomètres.

9. Procédé de brasage selon la revendication 1, dans lequel la couche d'accroche (8) comporte du chrome et dans lequel la couche barrière de diffusion (12) comporte du platine.
